# EUROPEAN PATENT APPLICATION

(11) **EP 1 411 323 A1**
(43) Date of publication of application: **21.04.2004**
(21) Application number: 03022234.3
(22) Date of filing: 30.09.2003
(51) Int. Cl.: G01B 11/26, B23Q 17/22

(54) **Misalignment amount detection apparatus and alignment apparatus, and accuracy analysis apparatus with the alignment apparatus**

(30) Priority: 07.10.2002 JP 2002293453
(71) Applicant: Mori Seiki Co., Ltd., Yamatokoriyama-shi, Nara 639-1160 (JP); Intelligent Manufacturing Systems International, Sacramento, CA 95814 (US)
(72) Inventor: Kobi, Takahiro, Yamatokoriyama-shi Nara, 639-1160 (JP)
(74) Representative: Reinhard - Skuhra - Weise & Partner GbR

(57) **Abstract**

An alignment apparatus 2 has a rotation angle position detector 35 comprising relatively rotatable first and second members 36 and 37. The first member 36 is secured on a first base 10 on a rotary table 83, and the second member 37 is secured to the lower face of a second base 41. A first movable body 43 is disposed on the second base 41 to be movable along a first axis, and a second movable body 45 is disposed on the first movable body 43 to be movable along a second axis. When the rotary table 83 is rotated while the second movable body 45 is restrained, the first movable body 43 is moved along the first and second axes. The misalignment amount between the rotary table 83 and the rotation angle position detector 35 is calculated from the movement position of the first movable body 43.

## Description

### BACKGROUND OF THE INVENTION

### Field of the Invention

The present invention relates to a misalignment amount detection apparatus for detecting a positional difference amount (misalignment amount) between the rotation center axis of a rotation angle position detector comprising first and second members provided so as to be relatively rotatable around a predetermined rotation center axis and having a scale on one member and a reader on the other member and the rotation center axis of a rotary table on which the rotation angle position detector is disposed, to an alignment apparatus, having this misalignment amount detection apparatus, for aligning the rotation center axis of the rotation angle position detector with the rotation center axis of the rotary table, and to an accuracy analysis apparatus for analyzing accuracy, such as the rotation accuracy and the rotation operation accuracy of the rotary table, by using the aligned rotation angle position detector.

### Description of the Prior Art

In the field of a machine tool, for example, a loading face is provided, and a rotary table that is rotatably provided around an axis orthogonal to this loading face and can be indexed to a predetermined rotation angle (rotation angle position) in the rotation direction thereof is used.

Since the indexing accuracy (rotation accuracy) of the rotary table has a direct influence on machining accuracy, it is measured at production and as necessary during usage. Conventionally, an autocollimator or the like has been used for the measurement of this indexing accuracy.

However, in the measurement method using this autocollimator, the number of reflectors for the method is limited, whereby measurement can generally be done with only accuracy corresponding to indexing at intervals of 30 degrees. Hence, the measurement method is not necessarily sufficient with respect to the measurement accuracy.

To solve this problem, attention is paid to a rotary encoder as a detector capable of measuring the indexing accuracy at intervals of a given rotation angle relatively easily and highly accurately.

This rotary encoder is available in various types, such as optical, magnetic, contact and capacitance types. As its common structure, it has first and second members provided so as to be relatively rotatable around a preset rotation center axis and having a scale on the one member and a reader on the other member. For example, by detecting the position of the scale using the reader in a state wherein the first member is secured to the rotary table and the second member is not rotated, the relative rotation angle position between the two members can be detected, and the indexing accuracy of the rotary table is measured.

The relative positional relationship between the scale and the reader is very important when the relative rotation angle position between the two members is detected. If the positional relationship therebetween is displaced from its initial setting state, the rotation angle position cannot be detected accurately. Therefore, in the measurement of the indexing accuracy of the rotary table using such a rotary encoder, it is necessary to accurately align the rotation center axis of the two members constituting the rotary encoder with the rotation center axis of the rotary table.

On the other hand, an apparatus capable of easily aligning the rotation center axis of the rotary encoder and the rotation center axis of the rotary table is not available conventionally. Hence, there is no other method but to measure the relative displacement between the rotation center axis of the rotary encoder and the rotation center axis of the rotary table by rotating the rotary table in a state wherein a contact-type indicator is made contact with the outer peripheral face of the rotary encoder on the rotary table, for example, and to adjust the position of the rotary encoder on the rotary table by manual work so that the measured displacement becomes zero.

However, the alignment of the rotation center axis of the rotary encoder and the rotation center axis of the rotary table by the manual work described above is very complicated, requires skill and is inefficient.

In consideration of the above-mentioned circumstances, the present invention is intended to provide a misalignment amount detection apparatus capable of easily detecting the misalignment amount between the rotation center axis of the rotary encoder and the rotation center axis of the rotary table to be inspected, to provide an alignment apparatus capable of easily aligning the rotation center axis of the rotary encoder and the rotation center axis of the rotary table on the basis of the detected misalignment amount, and to provide an accuracy analysis apparatus capable of easily analyzing the rotation accuracy and rotation operation accuracy of the rotary table by using the aligned rotary encoder.

### SUMMARY OF THE INVENTION

In order to attain the above-mentioned objects, the present invention relates to a misalignment amount detection apparatus for detecting a misalignment amount between a rotation center axis of a rotation angle position detector comprising first and second members provided so as to be relatively rotatable around the rotation center axis and having a scale on the one member and a reader on the other member and a rotation center axis of a rotary table on which the rotation angle position detector is disposed, comprising:
a first base secured to an upper face of the rotary table in a state wherein the first member of the rotation angle position detector is secured to an upper face of the first base,
a second base mounted on the first base via the second member and the first member so as to be relatively rotatable to the first base, in a state wherein the second member of the rotation angle position detector is secured to a lower face of the second base,
a first movable body provided so as to be relatively movable with respect to the second base along a first axis orthogonal to the rotation center axis of the rotary table,
a first guide mechanism, disposed on the second base, for guiding the first movable body along the first axis,
a first position detector for detecting a relative positional relationship between the second base and the first movable body in a direction of the first axis,
a second movable body provided so as to be relatively movable with respect to the first movable body along a second axis orthogonal to the rotation center axis of the rotary table and intersecting the first axis,
a second guide mechanism, disposed on the first movable body, for guiding the second movable body along the second axis,
a second position detector for detecting a relative positional relationship between the first movable body and the second movable body in a direction of the second axis, and
restraining means for restraining a movement of the second movable body at least in a plane orthogonal to the rotation center axis of the rotary table.

In a state wherein the first base is mounted on the rotary table and secured to the upper face of the rotary table and the movement of the second movable body is restrained by the restraining means, when the rotary table is rotated around the rotation center axis thereof, the first base and the first member of the rotation angle position detector secured thereto rotate together with the rotary table around the rotation center axis thereof. On the other hand, the second member of the rotation angle position detector, the second base, the first movable body and the second movable body are maintained non-rotated by the restraining action of the restraining means.

In the case when the rotation center axis of the rotary table is not aligned with the rotation center axis of the rotation angle position detector, the combination of the first base and the first member of the rotation angle position detector and the combination of the second base and the second member of the rotation angle position detector swivel and move around the rotation center axis of the rotary table while relative rotational motion occurs between the first member and the second member.

After the occurrence of the above-mentioned swiveling and movement, the first movable body provided so as to be relatively movable with respect to the second base is relatively moved in the first axis direction under the guidance of the first guide mechanism. Furthermore, a relative displacement along the second axis occurs between the first movable body and the second movable body provided relatively movable along the second axis. In other words, the first movable body is moved in the second axis direction under the guidance of the second guide mechanism. By the movements of the first movable body along the first and second axes, the misalignment between the rotation center axis of the rotary table and the rotation center axis of the rotation angle position detector is absorbed. In a state wherein the second movable body is restrained, the first base, the rotation angle position detector and the second base swivel and move around the rotation center axis of the rotary table. After the movement of the first movable body along the first and second axes, its position is detected by the first position detector and the second position detector.

The movements of the first movable body along the first and second axes are dependent on the misalignment amount between the rotation center axis of the rotary table and the rotation center axis of the rotation angle position detector. From the movement amounts of the first movable body, the misalignment amounts between the rotation center axis of the rotary table and the rotation center axis of the rotation angle position detector along the first and second axes can be calculated. In other words, the difference between the maximum value and the minimum value of the position of the first movable body in each of the first and second axis directions at the time when the rotary table is rotated once is obtained and halved, whereby the positional difference amount (misalignment amount) in each direction can be calculated.

As described above, in the misalignment amount detection apparatus in accordance with the prevent invention, this apparatus is mounted on the rotary table and the first base is secured. Then, the second movable body is restrained by the restraining means, and the rotary table is rotated. By carrying out only these simple operations, the misalignment amount between the rotation center axis of the rotary table and the rotation center axis of the rotation angle position detector can be detected easily.

Furthermore, the present invention relates to an alignment apparatus comprising the misalignment amount detection apparatus and further comprising mounting means for mounting the first base on the rotary table so as to be movable along the first and second axes and position adjustment means for adjusting a position of the first base in the first and second axis directions.

With this alignment apparatus, on the basis of the misalignment amount between the rotation center axis of the rotary table and the rotation center axis of the rotation angle position detector calculated as described above, the position adjustment means moves the first base along the first and second axes so as to cancel the calculated misalignment amount, whereby the rotation center axis of the rotary table can be aligned accurately with the rotation center axis of the rotation angle position detector. Furthermore, with this alignment apparatus, by only roughly installing the rotation angle position detector on the rotary table via the first base, the rotation center axes of both can be aligned easily with each other.

The position adjustment means comprises a drive mechanism for moving the first base in the first and second axis directions and a control section for moving the first base in the first and second axis directions by controlling an operation of the drive mechanism on the basis of detection positions in the first and second axis directions detected by the first and second position detectors. This position adjustment means can automatically move the first base in the first and second axis directions by using the drive mechanism driven and controlled by the control section so as to cancel the calculated misalignment amount. As a result, the rotation center axis of the rotary table can be aligned automatically and accurately with the rotation center axis of the rotation angle position detector.

Furthermore, the present invention relates to an accuracy analysis apparatus for analyzing a rotation accuracy of a rotary table of a machine tool having the rotary table, a rotation drive mechanism for indexing the rotary table to a predetermined rotation angle position by rotating the rotary table and a control apparatus for controlling an operation of the rotation drive mechanism, comprising:
the alignment apparatus, and rotation accuracy analyzing means for analyzing the rotation accuracy of the rotary table on the basis of a rotation angle position commanded by the control apparatus and an actual rotation angle position of the rotary table detected by the rotation angle position detector.

With this accuracy analysis apparatus, the rotation accuracy analyzing means analyzes the rotation accuracy of the rotary table (indexing accuracy) on the basis of the rotation angle position commanded by the control apparatus and the actual rotation angle position of the rotary table detected by the rotation angle position detector installed on the rotary table. In other words, the analyzing means analyzes the response accuracy corresponding to the commanded value. The alignment apparatus in accordance with the present invention can accurately align the rotation center axis of the rotation angle position detector with the rotation center axis of the rotary table as described above. Hence, the accuracy analysis apparatus in accordance with the present invention can accurately analyze the rotation accuracy of the rotary table.

Furthermore, the present invention relates to an accuracy analysis apparatus for analyzing a rotation operation accuracy of a rotary table of a machine tool having the rotary table, a rotation drive mechanism for indexing the rotary table to a predetermined rotation angle position by rotating the rotary table, a rotation angle position detector for detecting a rotation angle position driven and controlled by the rotation drive mechanism, and a control apparatus for feedback-controlling the rotation drive mechanism on the basis of a rotation angle position detected by the rotation angle position detector, comprising:
the alignment apparatus, and operation accuracy analyzing means for analyzing the rotation operation accuracy of the rotary table on the basis of the rotation angle position detected by the rotation angle position detector of the machine tool and the rotation angle position detected by the rotation angle position detector of the alignment apparatus.

With this accuracy analysis apparatus, the operation accuracy analyzing means analyzes the rotation operation accuracy of the rotary table on the basis of the rotation angle position detected by the rotation angle position detector of the machine tool and the rotation angle position detected by the rotation angle position detector of the alignment apparatus.

The members constituting the rotation drive mechanism are not completely rigid but are usually deformed elastically by external forces. Therefore, when the rotary table is driven, its internal drive system is deformed elastically, whereby a difference may occur between the value input to the system and the value output from the system. In addition, there is a backlash between the meshing gear teeth of the rotation drive mechanism. Furthermore, the rotation angle changes when the rotation drive mechanism is deformed thermally owing to heat. These are referred to as the so-called lost motion.

The accuracy analysis apparatus in accordance with the present invention compares and analyzes the rotation angle position (the value input to the system) that is detected by the rotation angle position detector of the machine tool after driving and control with the actual rotation angle position of the rotary table (the value output from the system) that is detected by the rotation angle position detector of the alignment apparatus. Hence, the accuracy analysis apparatus analyzes the rotation operation accuracy of the rotary table, that is, an operation error, such as the above-mentioned lost motion. Therefore, by carrying out correction depending on the operation error amount analyzed as described above, the rotation accuracy (indexing accuracy) of the rotary table can be raised.

### BRIEF DESCRIPTION OF THE DRAWINGS

FIG. 1 is a front view showing the outline configuration of an accuracy analysis apparatus in accordance with an embodiment of the present invention, partly in blocks;
FIG. 2 is a plan view showing the outline configuration of the accuracy analysis apparatus in accordance with the embodiment, partly in blocks; and
FIG. 3 is an explanatory view illustrating the state of an alignment apparatus changing depending on the rotation of a rotary table.

### DESCRIPTION OF THE PREFERRED EMBODIMENT

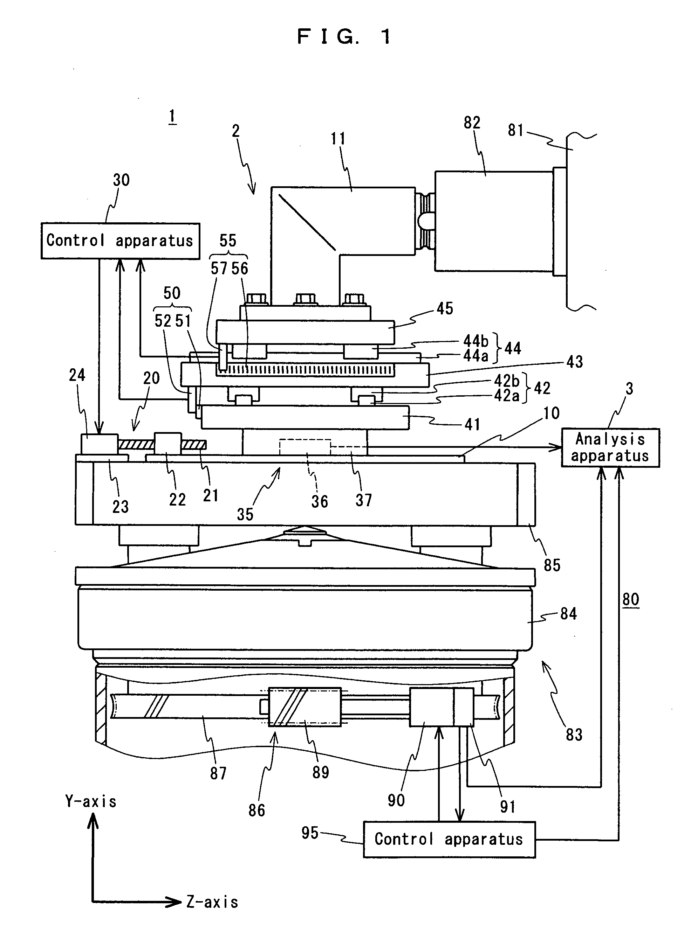

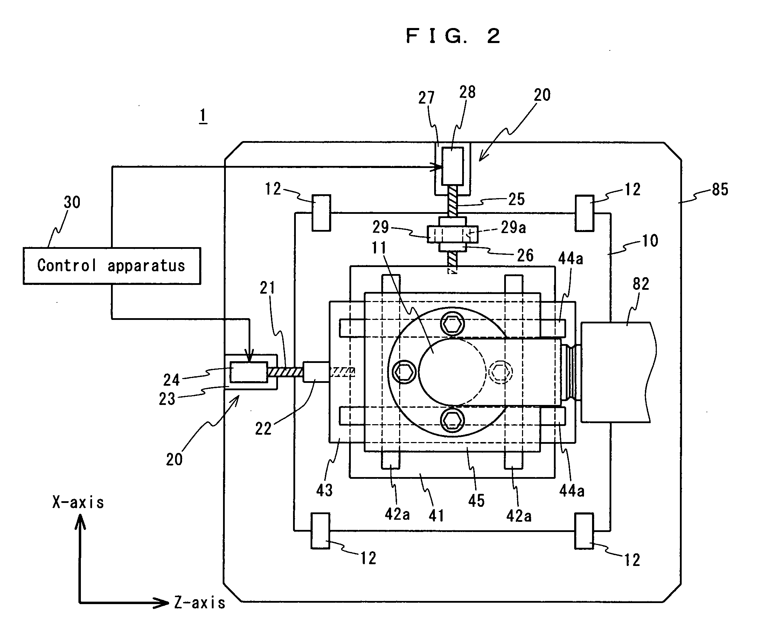

A preferred embodiment in accordance with the present invention will be described below on the basis of the accompanying drawings. FIG. 1 is a front view showing the outline configuration of an accuracy analysis apparatus in accordance with an embodiment of the present invention, partly in blocks, and FIG. 2 is a plan view showing the outline configuration of the accuracy analysis apparatus in accordance with the embodiment, partly in blocks.

As shown in FIGS. 1 and 2, an accuracy analysis apparatus 1 in accordance with this embodiment comprises an alignment apparatus 2, having a rotary encoder (rotation angle position detector) 35 and mounted on the rotary table 83 of a machine tool 80, for aligning the rotation center axis of the rotary encoder 35 with the rotation center axis of the rotary table 83, and an analysis apparatus 3 for analyzing the rotation accuracy (indexing accuracy) and the rotation operation accuracy of the rotary table 83.

The machine tool 80 in accordance with this embodiment comprises a bed (not shown), a column (not shown) mounted on this bed (not shown), a spindle head 81 supported by the column (not shown) so as to be movable in the Y-axis direction, a spindle 82 supported so as to be rotatable around its axis by the spindle head 81, a rotary table 83 mounted on the bed (not shown) so as to be movable in the X-axis direction and the Z-axis direction, a rotation drive mechanism 86 for indexing the rotary table 83 to a predetermined rotation angle position by rotating the rotary table 83 around the rotation center axis thereof, a rotary encoder (rotation angle position detector) 91 for detecting the rotation angle position driven and controlled by the rotation drive mechanism 86, and a control apparatus 95 for feedback-controlling the rotation drive mechanism 86 on the basis of the rotation angle position fed back from the rotary encoder 91.

In addition, the rotary table 83 comprises a rotary base 84 provided so as to be rotatable around the rotation center axis thereof, and a pallet 85 mounted on and secured to this rotary base 84 so as to be rotatable together with the rotary base 84. The rotary base 84 is driven by the rotation drive mechanism 86. The rotation drive mechanism 86 comprises a worm wheel 87 provided on the rotary shaft (not shown) of the rotary base 84, and a worm 89 meshing with the worm wheel 87, and a servomotor 90 for rotating the worm 89 around the axis thereof. The rotary encoder 91 is installed on this servomotor 90 and detects its rotation angle position, thereby indirectly detecting the rotation angle position of the rotary table 83 that is driven and controlled by the rotation drive mechanism 86.

The rotation angle position detected by the rotary encoder 91 is transmitted to both the analysis apparatus 3 and the control apparatus 95.

The alignment apparatus 2 comprises a first base 10 mounted on the pallet 85 of the machine tool 80, a position adjustment mechanism 20 for adjusting the position of the first base 10 mounted on the pallet 85, the rotary encoder (rotation angle position detector) 35 disposed on the upper face of the first base 10, a second base 41 provided on the rotary encoder 35, a pair of X-axis linear guides (first guide mechanism) 42, installed on the second base 41, for guiding the movement along the X-axis (first axis) orthogonal to the rotation center axis of the rotary table 83, a first movable body 43 supported so as to be movable along the X-axis by the X-axis linear guides 42, a pair of Z-axis linear guides (second guide mechanism) 44, installed on the first movable body 43, for guiding the movement along the Z-axis (second axis) orthogonal to the rotation center axis of the rotary table 83 and the X-axis, a second movable body 45 supported so as to be movable along the Z-axis by Z-axis linear guides 44, an X-axis position detector (first position detector) 50 for detecting the relative positional relationship in the X-axis direction between the second base 41 and the first movable body 43, a Z-axis position detector (second position detector) 55 for detecting the relative positional relationship in the Z-axis direction between the first movable body 43 and the second movable body 45, and a restraining member 11 for restraining the movement of the second movable body 45.

The first base 10 is secured to the upper face of the pallet 85 by clamping devices 12 disposed on the pallet 85. On the other hand, when the first base 10 is unclamped, it is movable in the X-axis and Z-axis directions and rotates integrally with the pallet 85 around the rotation center axis of the rotary table 83.

The rotary encoder 35 comprises a first member 36 and a second member 37 provided so as to be relatively rotatable around a predetermined rotation center axis. The second member 37 is provided with a scale, and the first member 36 is provided with a reader. The second member 37 is secured to the lower face of the second base 41, and the first member 36 is secured to the upper face of the first base 10.

The reader installed on the first member 36 reads the scale installed on the second member 37, whereby the relative rotation angle position of the first member 36 with respect to the second member 37 is detected. In other words, the rotation angle position of the first base 10 to which the first member 36 is secured (eventually the rotation angle position of the rotary table 83 to which the first base 10 is secured) is detected. The rotation angle position detected by the reader of the first member 36 is transmitted to the analysis apparatus 3.

The X-axis linear guide 42 comprises an X-axis guide rail 42a secured to the upper face of the second base 41, and an X-axis slider 42b secured to the lower face of the first movable body 43 and engaged with the X-axis guide rail 42a so as to be movable along this guide rail. The Z-axis linear guide 44 comprises a Z-axis guide rail 44a secured to the upper face of the first movable body 43, and a Z-axis slider 44b secured to the lower face of the second movable body 45 and engaged with the Z-axis guide rail 44a so as to be movable along this guide rail.

In addition, the X-axis position detector 50 comprises an X-axis scale 51 installed on the side face of the second base 41 along the X-axis, and an X-axis reader 52, installed on the lower face of the first movable body 43 so as to face the X-axis scale 51, for reading the division of the X-axis scale 51. The Z-axis position detector 55 comprises a Z-axis scale 56 installed on the side face of the first movable body 43 along the Z-axis, and a Z-axis reader 57, installed on the lower face of the second movable body 45 so as to face the Z-axis scale 56, for reading the division of the Z-axis scale 56.

The detection position in the X-axis direction detected by the X-axis reader 52 and the detection position in the Z-axis direction detected by the Z-axis reader 57 are transmitted to the control apparatus 30 of the position adjustment mechanism 20, which is described later.

The restraining member 11 is formed of an L-shaped member, one end of which is secured to the upper face of the second movable body 45 so as to be detachable and attachable thereto, and the other end of which is formed so as to be installable on the spindle 82. In a state wherein the one end is secured to the upper face of the second movable body 45 and the other end is installed on the spindle 82, the restraining member 11 restrains the movement of the second movable body 45 in the three-dimensional space.

The position adjustment mechanism 20 comprises a Z-axis ball screw 21 and an X-axis ball screw 25 disposed along the Z-axis and X-axis, respectively, a Z-axis nut 22 secured to the upper face of the first base 10 and engaged with the Z-axis ball screw 21, an X-axis nut 26 engaged with the X-axis ball screw 25, an engagement member 29, having a through hole 29a through which the X-axis nut 26 is inserted, and secured to the upper face of the first base 10, for engaging and supporting the X-axis nut 26 so that the X-axis nut 26 is movable in the Z-axis direction and not movable in the X-axis direction, a Z-axis drive motor 24 and an X-axis drive motor 28, secured to the upper face of the pallet 85 via supporting members 23 and 27, respectively, for rotating the Z-axis ball screw 21 and the X-axis ball screw 25 around their axes, respectively, and the control apparatus 30 for controlling the operations of the Z-axis drive motor 24 and the X-axis drive motor 28 on the basis of the detection position in the Z-axis direction received from the Z-axis position detector 55 and the detection position in the X-axis direction received from the X-axis position detector 50 to move the first base 10 in the Z-axis direction and the X-axis direction.

The control apparatus 30 is configured so as to also control the operation of the clamping devices 12. Before driving the Z-axis drive motor 24 and the X-axis drive motor 28, the control apparatus 30 unclamps the clamping devices 12 to release the first base 10; after the Z-axis drive motor 24 and the X-axis drive motor 28 are driven, the control apparatus 30 drives the clamping devices 12 to clamp the first base 10. In this way, the control apparatus 30 controls the operation of the clamping devices 12.

After the rotation center axis of the rotary encoder 35 is aligned with the rotation center axis of the rotary table 83 by the alignment apparatus 2, the analysis apparatus 3 analyzes the rotation accuracy and the rotation operation accuracy of the rotary table 83 driven by the control apparatus 95 on the basis of the rotation angle position received from the rotary encoder 35 and the rotation angle position received from the rotary encoder 91.

More specifically, the rotation angle position of the rotary table 83, an operation target thereof, is received from the control apparatus 95 for feedback-controlling the rotation drive mechanism 86, and the actual rotation angle position of the rotary table 83 driven by the rotation drive mechanism 86 is received from the rotary encoder 35. The difference between the two is calculated, whereby the rotation accuracy of the rotary table 83 is calculated.

Furthermore, the rotation angle position of the rotary table 83 driven and controlled by the rotation drive mechanism 86 is received from the rotary encoder 91, and the actual rotation angle position of the rotary table 83 driven by the rotation drive mechanism 86 is received from the rotary encoder 35. The difference between the two is calculated, whereby the rotation operation accuracy of the rotary table 83 is calculated.

In the accuracy analysis apparatus 1 in accordance with this embodiment configured as described above, after the rotation center axis of the rotary table 83 is aligned with the rotation center axis of the rotary encoder 35 by the alignment apparatus 2, the analysis apparatus 3 analyzes the rotation accuracy and the rotation operation accuracy of the rotary table 83 as described below.

First, among the constituents of the alignment apparatus 2, a structural body comprising the first base 10, the rotary encoder 35, the second base 41, the X-axis linear guides 42, the first movable body 43, the Z-axis linear guides 44, the second movable body 45, the X-axis position detector 50 and the Z-axis position detector 55 is mounted on the pallet 85. Then, the position adjustment mechanism 20 and the clamping devices 12 are installed on the pallet 85, and the first base 10 is clamped on the pallet 85 by the clamping devices 12. At the time of the mounting of the structural body on the pallet 85, the structural body is mounted on the pallet 85 while visual confirmation is made so that the rotation center axis of the rotary encoder 35 is roughly aligned with the rotation center axis of the pallet 85.

Next, after the one end of the restraining member 11 is installed on the spindle 82, both the rotary table 83 and the spindle head 81 are driven. Then, the other end of the restraining member 11 is secured to the upper face of the second movable body 45. This restrains the movement of the second movable body 45 in the three-dimensional space.

When the rotary table 83 is rotated at least 360 degrees around the rotation center axis thereof by driving the rotation drive mechanism 86 using the control apparatus 95, if the rotation center axis of the rotary table 83 is not aligned with the rotation center axis of the rotary encoder 35 (these are not aligned in most cases), the combination of the first base 10 and the first member 36 of the rotary encoder 35 and the combination of the second base 41 and the second member 37 of the rotary encoder 35 swivel and move around the rotation center axis of the rotary table 83 while relative rotational motion occurs between the first member 36 and the second member 37.

After the occurrence of this swiveling and movement, the first movable body 43 provided so as to be relatively movable with respect to the second base 41 is relatively moved in the X-axis direction under the guidance of the X-axis linear guides 42. Furthermore, a relative displacement along the Z-axis occurs between the first movable body 43 and the second movable body 45 provided so as to be relatively movable along the Z-axis. In other words, the first movable body 43 is moved in the Z-axis direction under the guidance of the Z-axis linear guides 44. By the movements of the first movable body 43 along the X-axis and the Z-axis, the misalignment between the rotation center axis of the rotary table 83 and the rotation center axis of the rotary encoder 35 is absorbed. In the state wherein the second movable body 45 is restrained, the first base 10 and the first member 36 of the rotary encoder 35 swivel and move around the rotation center axis of the rotary table 83.

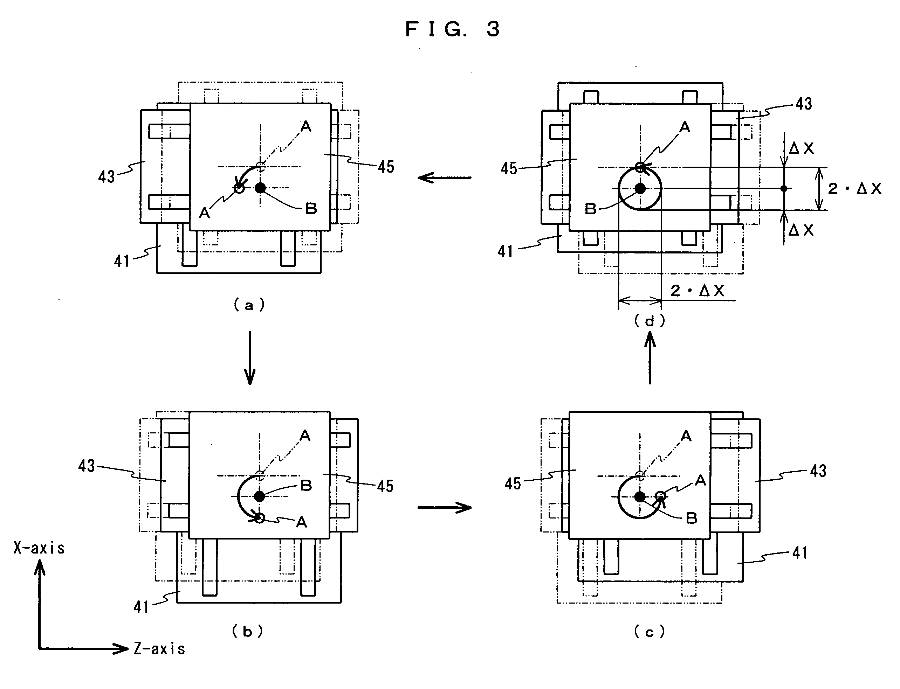

This state is shown in FIG. 3. In the figure, letter A designates the rotation center axis of the rotary encoder 35, and letter B designates the rotation center axis of the rotary table 83. In addition, FIG. 3 (a) shows the positional relationship among the second base 41, the first movable body 43 and the second movable body 45 at the time when the rotary table 83 is rotated 90 degrees counterclockwise, FIG. 3 (b) shows the positional relationship at the time when the rotary table 83 is rotated 180 degrees counterclockwise, FIG. 3 (c) shows the positional relationship at the time when the rotary table 83 is rotated 270 degrees counterclockwise, and FIG. 3 (d) shows the positional relationship at the time when the rotary table 83 is rotated 360 degrees counterclockwise.

When it is assumed that the misalignment amount between the rotation center axis of the rotary encoder 35 and the rotation center axis of the rotary table 83 is ΔX as shown in FIG. 3 (d) , the rotation center axis of the rotary encoder 35 is swiveled and moved around the rotation center axis of the rotary table 83 so as to draw a trajectory having a radius of ΔX. The respective movement amounts of the first movable body 43 in the X-axis direction and the Z-axis direction are 2 • ΔX.

The X-axis and Z-axis positions of the first movable body 43 have been detected by the X-axis position detector 50 and the Z-axis position detector 55, respectively. The position data detected by the X-axis position detector 50 and the position data detected by the Z-axis position detector 55 have been respectively transmitted to the control apparatus 30.

While the rotary table 83 is rotated, the control apparatus 30 receives the X-axis position and the Z-axis position of the first movable body 43 from the X-axis position detector 50 and the Z-axis position detector 55, respectively. The control apparatus 30 calculates the movement amount along each axis by obtaining the difference between the maximum value and the minimum value of the position of the first movable body 43 in each of the X-axis and Z-axis directions at the time when the rotary table 83 is rotated once. Then, the control apparatus 30 halves the movement amount, thereby calculating the misalignment amount between the rotation center axis of the rotary encoder 35 and the rotation center axis of the rotary table 83.

After releasing the clamping of the first base 10 by the clamping devices 12, the control apparatus 30 feedback-controls the X-axis drive motor 28 and the Z-axis drive motor 24 on the basis of the position data received from the X-axis position detector 50 and the position data received from the Z-axis position detector 55, respectively, and moves the first base 10 in the Z-axis direction and the X-axis direction so as to cancel the calculated misalignment amount. After the completion of the movement, the first base 10 is clamped by the clamping devices 12 again.

Hence, the rotation center axis of the rotary encoder 35 is accurately aligned with the rotation center axis of the rotary table 83.

Next, under the control of the control apparatus 95, the rotary table 83 is rotated by the rotation drive mechanism 86 and indexed to a given rotation angle position. At this time, the rotation angle position (operation target angle position) for indexing the rotary table 83 by rotating the rotary table 83 is transmitted from the control apparatus 95 to the analysis apparatus 3. Furthermore, the rotation angle positions respectively detected by the rotary encoder 35 and the rotary encoder 91 are transmitted from the rotary encoder 35 and the rotary encoder 91 to the analysis apparatus 3, respectively. The analysis apparatus 3 analyzes the rotation accuracy and the rotation operation accuracy of the rotary table 83.

The rotation angle position detected by the rotary encoder 35 is the actual rotation angle position of the rotary table 83. First, the analysis apparatus 3 calculates the difference between the operation target angle position received from the control apparatus 95 and the actual rotation angle position of the rotary table 83 received from the rotary encoder 35, thereby calculating the rotation error, that is, the rotation accuracy, of the rotary table 83.

Next, the analysis apparatus 3 calculates the difference between the rotation angle position received from the rotary encoder 91, that is, the rotation angle position of the rotary table 83 driven and controlled by the rotation drive mechanism 86, and the actual rotation angle position of the rotary table 83 received from the rotary encoder 35, thereby calculating the rotation operation accuracy of the rotary table 83.

The worm wheel 87 and the worm 89 constituting the rotation drive mechanism 86 and the rotary base 84 of the rotary table 83 are not completely rigid but are usually deformed elastically by external forces. Therefore, when these are driven, they are deformed elastically, whereby a difference may occur between the rotation drive position (the rotation drive position input to the rotation drive mechanism 86) feedback-controlled by the control apparatus 95 and the actual rotation angle position (the rotation drive position output from the rotation drive mechanism 86) of the rotary table 83 (substantially the pallet 85). In addition, there is a backlash between the meshing gear teeth of the rotation drive mechanism 86. Furthermore, the rotation angle changes when the rotation drive mechanism 86 is deformed thermally owing to heat. These are referred to as the so-called lost motion. As described above, the analysis apparatus 3 calculates the difference between the rotation angle position received from the rotary encoder 91 and the actual rotation angle position of the rotary table 83 received from the rotary encoder 35, thereby calculating the above-mentioned lost motion amount (rotation operation accuracy).

As described above in detail, in the accuracy analysis apparatus 1 in accordance with this embodiment, the alignment apparatus 2 including the rotary encoder 35 for analyzing the rotation accuracy and the rotation operation accuracy of the rotary table 83 is mounted on the pallet 85 of the rotary table 83, and the first base 10 of the alignment apparatus 2 is secured. In addition, the second movable body 45 is restrained by the restraining member 11, and then the rotary table 83 is rotated. By carrying out only these simple operations, the misalignment amount between the rotation center axis of the rotary table 83 and the rotation center axis of the rotary encoder 35 can be detected. On the basis of the detected misalignment amount, the position adjustment mechanism 20 moves the first base 10 along the X-axis and the Z-axis so as to cancel the calculated misalignment amount, whereby the rotation center axis of the rotary table 83 can be aligned accurately with the rotation center axis of the rotary encoder 35.

By the above-mentioned accurate positioning of the rotary encoder 35 with respect to the rotary table 83, the above-mentioned rotation accuracy and rotation operation accuracy can be analyzed accurately. Furthermore, by the calculation of the amount of the lost motion, correction depending on this can be carried out, whereby the rotation accuracy (indexing accuracy) of the rotary table 83 can be improved.

Although an embodiment of the present invention has been explained above, concrete embodiments that can be attained by the present invention are not limited to this embodiment.

## Claims

1. A misalignment amount detection apparatus for detecting a misalignment amount between a rotation center axis of a rotation angle position detector (35) comprising first and second members (36, 37) provided so as to be relatively rotatable around the rotation center axis and having a scale on the one member and a reader on the other member and a rotation center axis of a rotary table (83) on which said rotation angle position detector is disposed,
**characterized in that** said misalignment amount detection apparatus comprises:
a first base (10) secured to an upper face of said rotary table in a state wherein said first member of said rotation angle position detector is secured to an upper face of said first base,
a second base (41) mounted on said first base via said second member and said first member so as to be relatively rotatable to said first base, in a state wherein said second member of said rotation angle position detector is secured to a lower face of said second base,
a first movable body (43) provided so as to be relatively movable with respect to said second base along a first axis orthogonal to the rotation center axis of said rotary table,
a first guide mechanism (42), disposed on said second base, for guiding said first movable body along said first axis,
a first position detector (50) for detecting a relative positional relationship between said second base and said first movable body in a direction of said first axis,
a second movable body (45) provided so as to be relatively movable with respect to said first movable body along a second axis orthogonal to the rotation center axis of said rotary table and intersecting said first axis,
a second guide mechanism (44), disposed on said first movable body, for guiding said second movable body along said second axis,
a second position detector (55) for detecting a relative positional relationship between said first movable body and said second movable body in a direction of said second axis, and
restraining means (11) for restraining a movement of said second movable body at least in a plane orthogonal to the rotation center axis of said rotary table.

2. An alignment apparatus (2) comprising said misalignment amount detection apparatus as set forth in claim 1 and further comprising:
mounting means (12) for mounting said first base on said rotary table so as to be movable along said first and second axes, and
position adjustment means (20) for adjusting a position of said first base in the directions of said first and second axes.

3. The alignment apparatus as set forth in claim 2, wherein said position adjustment means comprises:
a drive mechanism (24,28) for moving said first base in the directions of said first and second axes, and
a control section (30) for moving said first base in the directions of said first and second axes by controlling an operation of said drive mechanism on the basis of detection positions in the directions of said first and second axes detected by said first and second position detectors.

4. An accuracy analysis apparatus for analyzing a rotation accuracy of a rotary table (83) of a machine tool (80) having said rotary table, a rotation drive mechanism (86) for indexing said rotary table to a predetermined rotation angle position by rotating said rotary table and a control apparatus (95) for controlling an operation of said rotation drive mechanism,
**characterized in that** said accuracy analysis apparatus (1) comprises:
said alignment apparatus as set forth in claim 2 or 3, and
rotation accuracy analyzing means (3) for analyzing the rotation accuracy of said rotary table on the basis of a rotation angle position commanded by said control apparatus and an actual rotation angle position of said rotary table detected by said rotation angle position detector.

5. An accuracy analysis apparatus for analyzing a rotation operation accuracy of a rotary table (83) of a machine tool (80) having said rotary table, a rotation drive mechanism (86) for indexing said rotary table to a predetermined rotation angle position by rotating said rotary table, a rotation angle position detector (91) for detecting a rotation angle position driven and controlled by said rotation drive mechanism, and a control apparatus (95) for feedback-controlling said rotation drive mechanism on the basis of a rotation angle position detected by said rotation angle position detector,
**characterized in that** said accuracy analysis apparatus (1) comprises:
said alignment apparatus as set forth in claim 2 or 3, and
operation accuracy analyzing means (3) for analyzing the rotation operation accuracy of said rotary table on the basis of the rotation angle position detected by said rotation angle position detector of said machine tool and the rotation angle position detected by said rotation angle position detector of said alignment apparatus.
